# EUROPEAN PATENT APPLICATION

(11) **EP 3 798 465 A1**
(43) Date of publication of application: **31.03.2021**
(21) Application number: 20194746.2
(22) Date of filing: 07.09.2020
(51) Int. Cl.: F16F 15/131, F16F 15/133

(54) **TORSIONAL VIBRATION DAMPER**

(30) Priority: 25.09.2019 GB 201913840
(71) Applicant: Raicam Driveline S.r.l., 12084 Mondovi (CN) (IT)
(72) Inventor: Mazzarini, Nicola, 60030 Jesi, Ancona, (IT)
(74) Representative: Morrall, Roger

(57) **Abstract**

A torsional vibration damper for a vehicle driveline comprising a housing for connection with an input/output member of the damper and a drive flange mounted within the housing connected with an output/input member of the damper. Spring means act between the housing and drive flange to allow limited circumferential rotation between the housing and drive flange by compression of the spring means to damp torsional vibrations within the driveline. The damper housing has first and second annular housing side wall portions joined at their outer peripheries by a starter motor ring which forms part of the housing. The starter motor ring has abutments which contact further abutments on the drive flange to limit circumferential rotation between the drive flange and the housing.

## Description

This invention relates to torsional vibration dampers for vehicle drivelines which use circumferentially disposed compression springs to damp the vibrations.

In certain driveline applications a long spring travel is required to give the required damping characteristics. Such long travel springs require a large volume within the damper to accommodate the springs whilst at the same time retaining a compact overall size for the damper. There is also a requirement to simplify the construction of the damper to save costs. This particularly important in smaller low cost vehicles.

It is an object of the present invention to provide a damper construction which addresses the above requirements.

Thus in Thus in accordance with the present invention there is provided a torsional vibration damper for a vehicle driveline comprising a housing for connection with an input/output member of the damper and a drive flange mounted within the housing connected with an output/input member of the damper, and spring means acting between the housing and drive flange to allow limited circumferential rotation between the housing and drive flange by compression of the spring means to damp torsional vibrations within the driveline, the damper being characterised in that the housing comprise first and second annular housing side wall portions joined at their outer peripheries by a starter motor ring which forms part of the housing, the starter motor ring having abutments which contact further abutments on the drive flange to limit circumferential rotation between the drive flange and the housing.

The construction of the damper of the present invention is simplified and reduced in radial extent by including the starter ring into the walls of the damper housing thus reducing construction costs and simplifying assembly which is particularly important in dampers for smaller low cost vehicles. Additionally, by using the starter ring to provide abutments which cooperate with the further abutments on the drive flange the cost, size and complexity of the damper is further reduced.

The drive flange may be connected for rotation with a central hub which provides the output/input member of the damper and the housing and input/output member are mounted via bearing means on the hub.

The starter ring may be secured between the outer peripheries of the side wall portions by rivets or other mechanical fastening means such as nuts and bolts to avoid the use of welding and thus simplify construction of the housing. If production costs allow, the starter ring could even be welded between the side wall portions.

This housing configuration allows the radially outer portion of the spring means to be located further from the axis of rotation of the damper (i.e. closer to the starter motor ring gear) to provide a larger damping effect whilst retaining a compact overall size for the damper.

A first additional mass ring may be secured to outer peripheral portions of the housing to increase the inertia of the damper.

The first additional mass ring is used as a balance weight by removing material from the ring to rotationally balance the damper when assembled.

A second additional mass ring may be secured to the central hub.

The damper may take the form of a twin mass flywheel in which a primary flywheel is provided by the input/output member, the housing and any first additional mass ring carried by the housing and a secondary flywheel is provided by the drive flange, central hub and second additional mass ring, the primary and secondary flywheels being capable of limited relative rotation to damp torsional vibrations in the associated vehicle driveline by compression of the spring means and the output from the twin mass flywheel being via a friction surface on the second additional mass.

The spring means may comprise a series of circumferentially aligned compression springs housed in cutouts in the drive flange and corresponding pockets in the housing side walls with the springs being compressed between an end of each cutout and an end of the corresponding housing pocket on relative rotation of the housing and drive flange.

The drive flange may also be provided with an idle rattle damper to damp small amplitude oscillations which occur within the damper in engine idling conditions.

The spring means may comprise pairs of concentric springs in which the springs of each pair act in parallel or can be phased to start operation one after the other.

The present invention will now be described, by way of example only, with reference to the accompanying drawings in which:-
Figure 1 shows a sectional view through part of a first form of torsional vibration damper in accordance with the present invention;

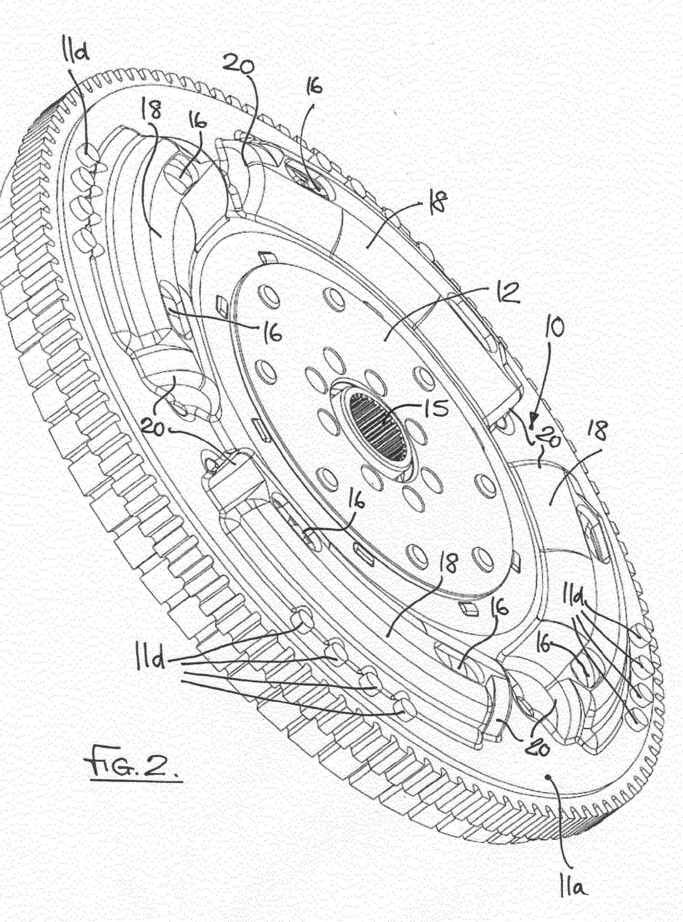

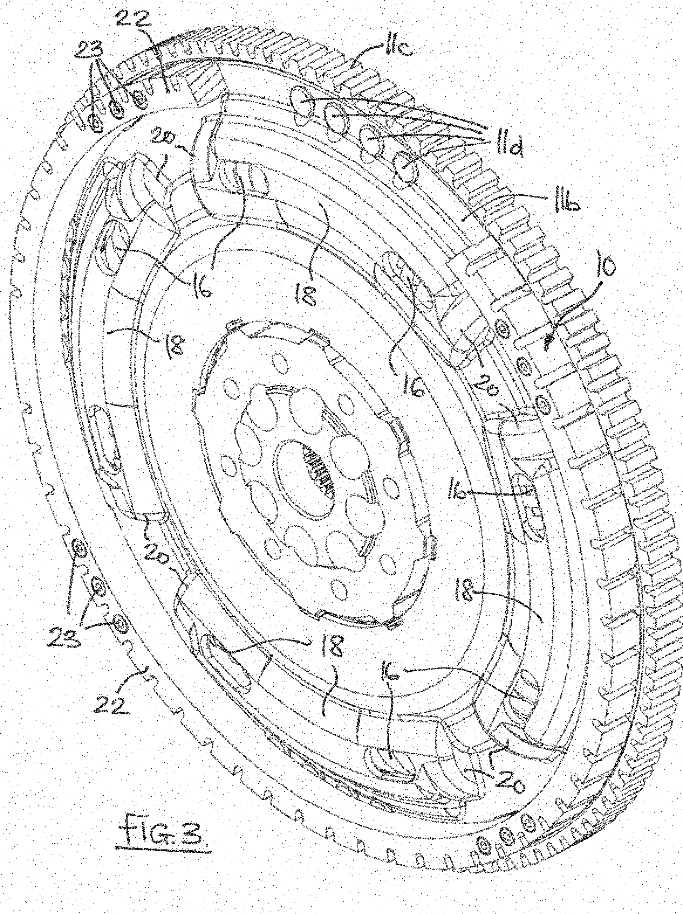

Figures 2 and 3 show perspective views in the directions of arrows A and B of Figure 1;
Figures 4 and 5 show the operation of damping springs and travel stops used in the damper of Figure 1;
Figure 6 shows part of a section through a second form of damper in accordance with the present invention which has a second additional mass ring secured to an output hub of the damper;
Figure 7 shows a side view in the direction of the arrow C of Figure 6;
Figure 8 shows a section through a third form of damper in accordance with the present invention which has a heavier second additional mass ring secured to the output hub to provide a twin mass flywheel, and
Figure 9 shows a perspective view in the direction of the arrow D of Figure 8.

Referring to the drawings, a torsional vibration damper 10 for a vehicle driveline has a housing 11 for connection with an input/output disc member 12 of the damper and a drive flange 13 mounted within the housing and connected with an output/input member of the damper in the form of a central hub 14. The hub 14 is splined at 15 for connection with the remainder of the vehicle driveline.

In accordance with the present invention the housing 11 comprises first and second annular housing side wall portions 11a and 11b joined at their outer peripheries by a starter motor ring 11c which forms part of the housing and is secured between the outer peripheries of the side wall portions 11a and 11b by rivets 11d. This avoids the use of welding in the construction of the housing which provides a significant cost reduction and simplifies assembly. Nuts and bolts could be used as an alternative to the rivets 11d. If production costs allow, the starter ring could even be welded between the side wall portions.

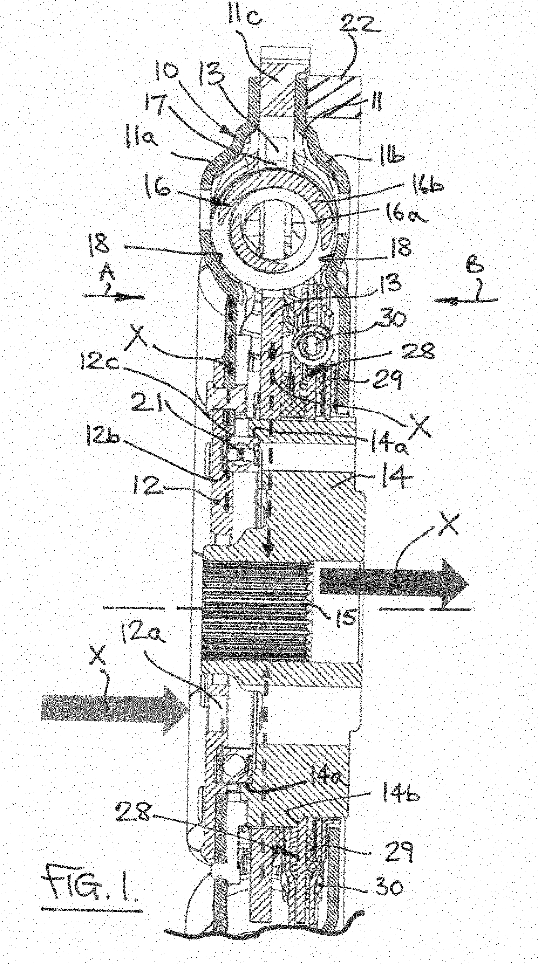

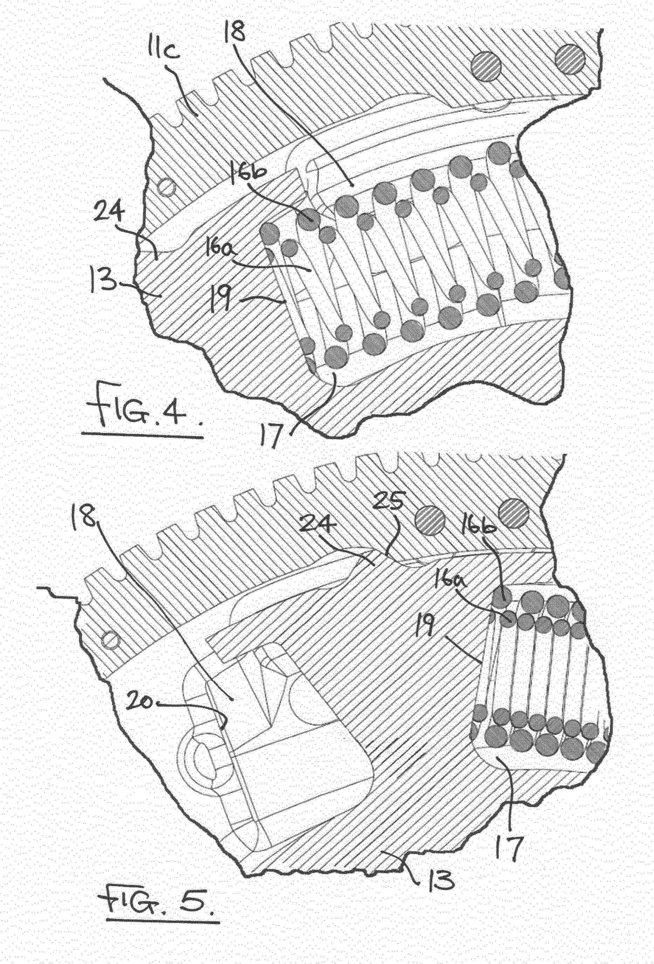

Compression springs 16 means acting between the housing 11 and drive flange 13, as shown in Figures 4 and 5, to allow limited circumferential rotation between the housing and drive flange by compression of the springs to damp torsional vibrations within the driveline. As will be understood the input disc member 12 is typically connected to the crankshaft of an engine (not shown) of the driveline via bolt holes 12a and the splines 15 of hub 14 are connected to a input shaft (not shown) of a gearbox of the driveline. A bearing 21 mounts input member 12 and housing 11 on hub 14 via hub shoulders 14a and shoulders 12b and 12c on member 12. Axial spring loading within the friction damping components 29 referred to below biases the hub 14 to the left as shown in Figure 1 via a further shoulder 14b thus retaining bearing 21 in position between shoulders 12b, 12c and 14a.

As can be seen from Figures 4 and 5 the springs 16 are arranged as a series of circumferentially aligned compression springs housed in cutouts 17 in the drive flange 13 and corresponding pockets 18 in the housing side walls 11a, 11b with the springs being compressed in a known manner between an end 19 of each cutout and an end 20 of the corresponding housing pocket 18 on relative rotation of the housing 11 and drive flange.

The torque path through the damper when the damper is providing power towards the associated gearbox is shown in Figure 1 by the arrows X with the torque entering the damper via bolt holes 12a and hence through housing 11, springs 16 and drive flange 13 to output hub 14.

If the damping requirements of a particular driveline require more inertia for better damping a first additional mass ring 22 may be secured to outer peripheral portions of the housing 11 by rivets 23 or other fastenings to provide the required increased inertia. This additional mass ring 22 may also be used as a balance weight by removing material from the ring to rotationally balance the damper when assembled.
The drive flange 13 has first abutments 24 which contact second abutments 25 on the starter ring 11c (see Figure 5) to limit circumferential rotation between the drive flange 13 and the housing 11.

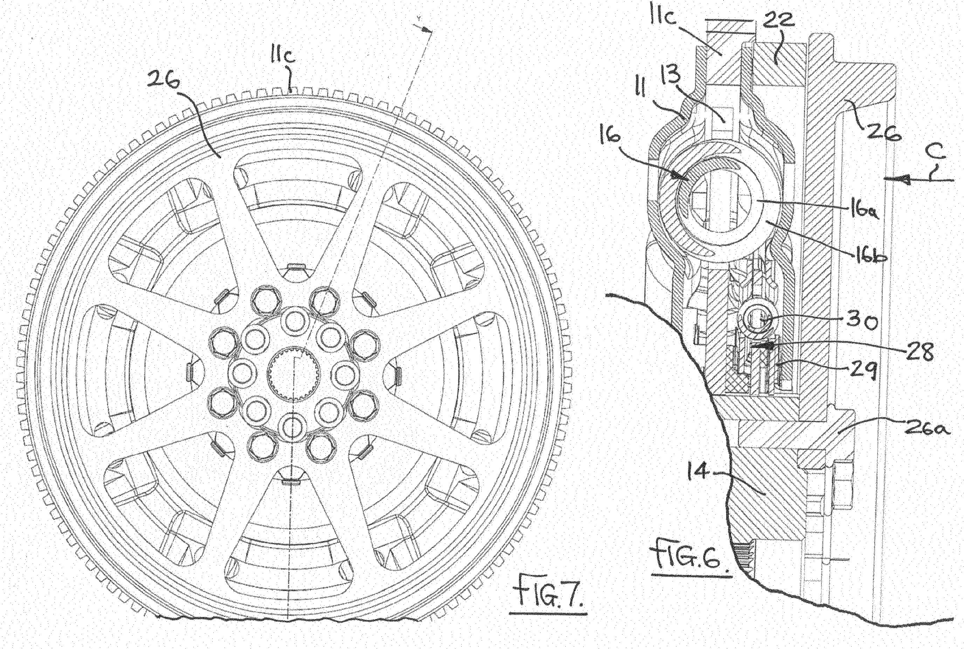

Figures 6 and 7 show a further version of a damper in accordance with the present invention in which a second additional mass ring 26 which is larger and heavier than ring 22. In the particular design shown, ring 26 is of a spoked construction and is secured to hub 14 by bolts 26a. Such a heavier second additional mass ring 26 may be required in some driveline applications depending on the inertia and stiffness in the driveline downstream of the damper in order to provide the necessary level of damping.

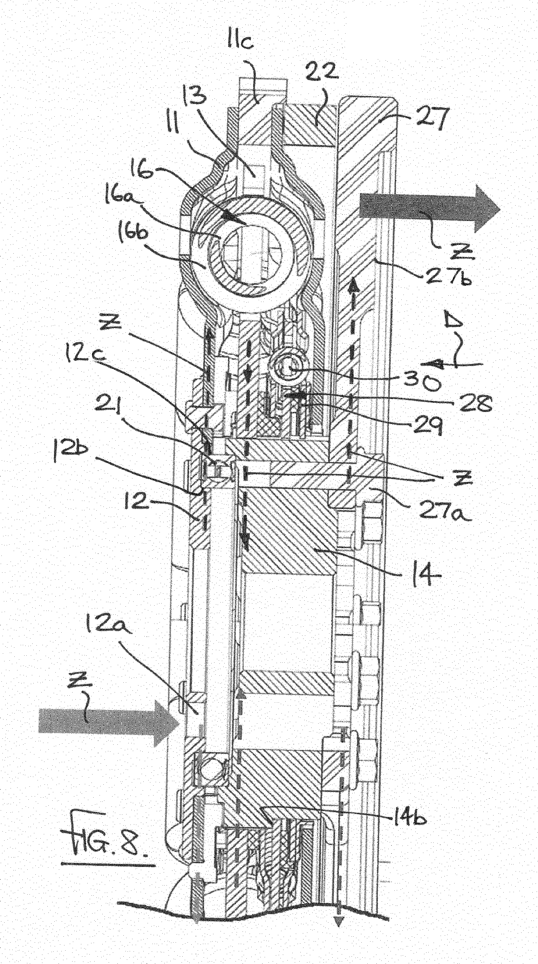

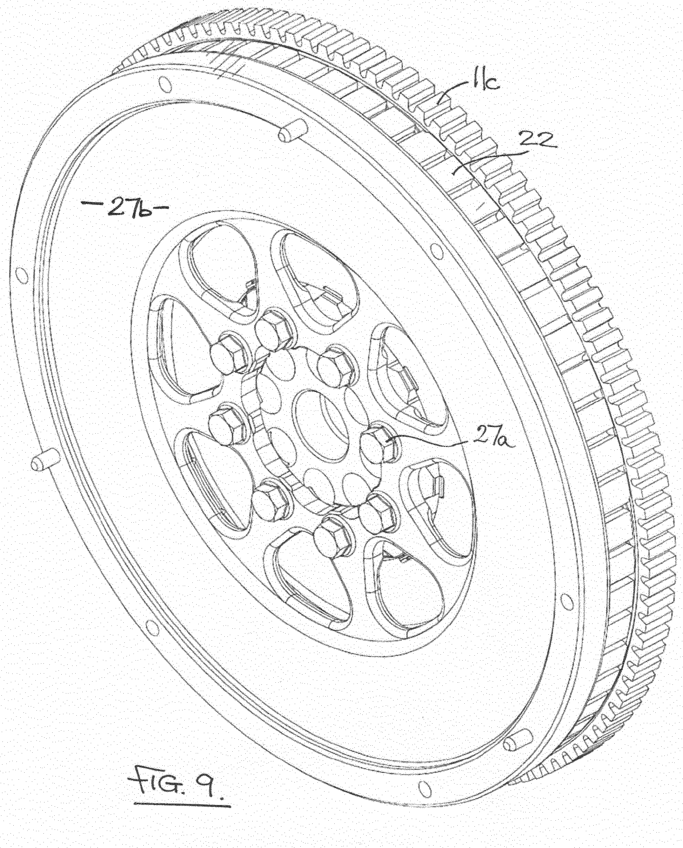

A yet further form of the present invention is shown in Figures 8 and 9 in which the damper is in the form of a twin mass flywheel with a primary flywheel being provided by the input/output disc member 12, the housing 11 and any first additional mass 22 carried by the housing and which is mounted by bearing 21 on a secondary flywheel provided by the hub 14 and an even heavier second additional mass ring 27 which is connected to the hub 14 by bolts 27a. The primary and secondary flywheels are capable of limited relative rotation to damp torsional vibrations in the associated vehicle driveline by compression of the springs 16 as previously described.

The torque path through this twin mass flywheel variant is shown by arrows Z in Figure 8 with the torque entering the twin mass fly wheel via bolt holes 12a and hence passing through housing 11, springs 16 and drive flange 13 to hub 14 and to heavier second additional mass 27 which, in this example, then transmits torque via its friction surface 27b to a clutch disc (not shown) of a drive clutch which forms part of the driveline.

All the variants of damper described above may be provided with an idle rattle damper 28 to damp small amplitude oscillations which occur within the damper when the engine of the driveline is idling. This idle rattle damper 28 may include friction damping components 29 and damping springs 30 which act between flange 13 and housing 11 in a known manner.

The springs 16 described above are shown as pairs of concentric springs 16a, 16b in which the springs of each pair can be arranged to act in parallel or can be phased to start operation one after the other depending on the damping characteristics required.

The construction of the damper of the present invention is simplified and reduced in radial extent by including the starter ring into the walls of the damper housing thus reducing construction costs and simplifying assembly which is particularly important in dampers for smaller low cost vehicles. Additionally, by using the starter ring to provide abutments which cooperate with further abutments on the drive flange the cost, size and complexity of the damper is further reduced. The various versions of the damper can also use many common components giving the construction a modular configuration which still further reduces production costs. This damper configuration allows the radially outer portion of the spring means to be located further from the axis of rotation of the damper (i.e. closer to the starter motor ring gear) to provide a larger damping effect whilst retaining a compact overall size for the damper.

## Claims

1. A torsional vibration damper (10) for a vehicle driveline comprising a housing (11) for connection with an input/output member (12) of the damper and a drive flange (13) mounted within the housing connected with an output/input member (14) of the damper, and spring means (16) acting between the housing and drive flange to allow limited circumferential rotation between the housing (11) and drive flange (13) by compression of the spring means (16) to damp torsional vibrations within the driveline, the damper being **characterised in that** the housing (11) comprise first and second annular housing side wall portions (11a, 11b) joined at their outer peripheries by a starter motor ring (11c) which forms part of the housing, the starter motor ring (11c) having abutments (25) which contact further abutments (24) on the drive flange (13) to limit circumferential rotation between the drive flange (13) and the housing (11).

2. A damper (10) according to claim 1 in which the drive flange (13) is connected for rotation with a central hub (14) which provides the output/input member of the damper and the housing (11) and input/output member (12) are mounted via bearing means (21) on the hub (14).

3. A damper (10) according to claim 1 or 2 in which the starter motor ring (11c) is secured between the outer peripheries of the side wall portions (11a, 11B) by rivets (11d) or other mechanical fastening means.

4. A damper (10) according to any one of claims 1 to 3 in which a first additional mass ring (22) is secured to outer peripheral portions of the housing (11) to increase the inertia of the damper.

5. A damper (10) according to claim 4 in which the first additional mass ring (22) is used as a balance weight by removing material from the ring to rotationally balance the damper (10) when assembled.

6. A damper (10) according to any one of claims 2 to 5 in which a second additional mass ring (26) is secured to the central hub (14).

7. A damper (10) according to claim 6 in the form of a twin mass flywheel in which a primary flywheel is provided by the input/output member (12), the housing (11) and any first additional mass ring (22) carried by the housing and a secondary flywheel is provided by the drive flange (13), central hub (14) and second additional mass ring (27), the primary and secondary flywheels being capable of limited relative rotation to damp torsional vibrations in the associated vehicle driveline by compression of the spring means (16) and the output from the twin mass flywheel being via a friction surface (27a) on the second additional mass (27).

8. A damper (10) according to any one of claims I to 7 in which the spring means (16) comprises a series of circumferentially aligned compression springs (16a, 16b) housed in cutouts (17) in the drive flange (13) and corresponding pockets (18) in the housing side walls (11a, 11b) with the springs being compressed between an end (19) of each cutout (17) and an end (20) of the corresponding housing pocket (18) on relative rotation of the housing (11) and drive flange (13).

9. A damper (10) according to any one of claims 1 to 8 in which the drive flange (13) is provided with an idle rattle damper (28) to damp small amplitude oscillations which occur within the damper (10) in engine idling conditions.

10. A damper (10) according to any one of claims 1 to 10 in which the spring means (16) comprises pairs of concentric springs (16a, 16b) in which the springs of each pair act in parallel or can be phased to start operation one after the other.
